# EUROPÄISCHE PATENTSCHRIFT

(11) **EP 1 641 602 B1**
(45) Veröffentlichungstag und Bekanntmachung des Hinweises auf die Patenterteilung: **20.03.2013**
(21) Anmeldenummer: 04739718.7
(22) Anmeldetag: 09.06.2004
(51) Int. Cl.: B26B 19/28

(54) **ELEKTRISCHES KLEINGERÄT MIT EINEM ELEKTROMOTOR ZUR ERZEUGUNG EINER OSZILLIERENDEN BEWEGUNG**
SMALL ELECTRICAL APPLIANCE COMPRISING AN ELECTRIC MOTOR FOR GENERATING AN OSCILLATING DISPLACEMENT
PETIT APPAREIL ELECTRIQUE POURVU D'UN MOTEUR ELECTRIQUE ET DESTINE A PRODUIRE UN MOUVEMENT OSCILLANT

(30) Priorität: 09.07.2003 DE 10330978
(43) Veröffentlichungstag der Anmeldung: 05.04.2006
(73) Patentinhaber: Braun GmbH, 61476 Kronberg (DE)
(72) Erfinder: KRAUS, Bernhard, 35619 Braunfels (DE)
(86) Internationale Anmeldenummer: PCT/EP2004/006199
(87) Internationale Veröffentlichungsnummer: WO 2005/006538

(56) Entgegenhaltungen:
- EP-A- 0 674 979
- GB-A- 847 156
- US-A- 3 538 359
- US-A- 4 595 849

## Beschreibung

Die Erfindung betrifft ein elektrisches Kleingerät mit einem Elektromotor zur Erzeugung einer oszillierenden Bewegung. Bei dem Kleingerät kann es sich insbesondere um einen elektrischen Rasierapparat oder eine elektrische Zahnbürste handeln.

Die EP0674979, welche den nächstliegenden Stand der Technik darstellt, beschreibt einen elektrischen Antrieb für ein Trockenrasiergerät mit zwei parallelen Scherböcken, die gegeneinander lineare Oszillationsbewegungen ausführen. Die Scherböcke weisen Permanentmagnete auf und stellen den Läufer des Antriebs dar. Der Ständer ist mit seiner Erregerspule ortsfest im Gehäuse des Rasiergerätes montiert. Ein Geschwindigkeitssensor und ein Stromregler sorgen dafür, dass die Schwingungsamplituden unabhängig vom der Last konstant bleiben.

Aus der DE 1 151 307 A ist ein Schwingankerantrieb für Trockenrasiergeräte mit hin- und hergehender Arbeitsbewegung eines Schermessers bekannt. Der bekannte Schwingankerantrieb weist einen mit dem Gehäuse des Rasiergeräts fest verbundenen und U-förmig ausgebildeten Elektromagneten auf. In der Nähe der Pole des feststehenden Elektromagneten sind ein Arbeitsanker und beiderseits des Arbeitsankers massensymmetrisch je ein schwingfähiger Ausgleichsanker angeordnet. Im Betriebszustand schwingt der Arbeitsanker, der das Schermesser antreibt, parallel zu den Polflächen des Elektromagneten, wobei die Ausgleichsanker eine dazu gegenphasige Schwingbewegung ausführen, um eine Übertragung der Schwingungen des Arbeitsankers auf das Gehäuse des Rasiergeräts möglichst zu verhindern.

Die DE 196 80 506 T1 offenbart einen elektrischen Rasierapparat mit einem oszillierenden Linearmotor, der einen stationären Elektromagneten und mehrere bewegliche Komponenten aufweist, die mit Hilfe des Elektromagneten in zueinander gegenphasige Schwingungsbewegungen versetzt werden. Um die Phasenbeziehung der beweglichen Komponenten zueinander auch unter Belastung einzuhalten, sind diese mittels eines Lenkermechanismus untereinander verbunden, der die Schwingungsbewegung unter Umkehrung der Richtung von der einen auf die andere bewegliche Komponente überträgt.

Aus der DE 197 81 664 C2 ist ein elektrischer Rasierer mit einem Linearantrieb bekannt, der einen hohlzylindrisch ausgebildeten Stator mit einer elektromagnetischen Spule aufweist. Im Stator sind zwei bewegliche Elemente angeordnet, die gegenphasig zueinander angetrieben werden und von denen eines ein Schermesser antreibt und das andere zur Unterdrückung unerwünschter Vibrationen ein Gegengewicht aufweisen kann.

Aus der EP 1 193 844 A1 ist ein linearer Oszillator bekannt, bei dem in einem als ein Stator ausgebildeten Gehäuse ein Läufer angeordnet ist, der eine hin- und hergehende Bewegung ausführt. In dem Gehäuse ist weiterhin eine Spindel zur Steuerung der Schwingungsamplitude des Läufers beweglich angeordnet. Der Läufer und die Spindel sind mittels Federn un-tereinander und mit dem Gehäuse gekoppelt. Die von dem linearen Oszillator erzeugte Schwingungsbewegung kann entweder am Läufer oder an der Spindel abgegriffen werden.

Der Erfindung liegt die Aufgabe zugrunde, wenigstens eine Arbeitseinheit, eines elektrischen Kleingeräts auf möglichst optimale Weise anzutreiben.

Diese Aufgabe wird durch die Merkmalskombination des Anspruchs 1 gelöst.

Das erfindungsgemäße elektrische Kleingerät weist einen Elektromotor zum Erzeugen wenigstens einer oszillierenden Bewegung auf. Der Elektromotor verfügt über zwei Antriebskomponenten. Eine der Antriebskomponenten ist über wenigstens ein erstes elastisches Element mit wenigstens einem beweglichen Bauteil verbunden und mittels eines Magnetfelds einer elektrischen Spule zu einer oszillierenden Bewegung anregbar. Die Besonderheit des erfindungsgemäßen elektrischen Kleingeräts besteht darin, daß beide Antriebskomponenten sich gegenseitig antreiben und zur Ausführung von zueinander gegenphasig oszillierenden Bewegungen beweglich im elektrischen Kleingerät angeordnet sind.

Die Erfindung hat den Vorteil, daß ein vibrationsarmer Betrieb des elektrischen Kleingeräts mit einem hohen Wirkungsgrad möglich ist. Ein weiterer Vorteil besteht darin, daß der Elektromotor von vorneherein zwei oszillierende Bewegungen erzeugt und damit ohne jegliche Zusatzmaßnahme diese beiden Bewegungen zur Verfügung stehen. Schließlich ist es noch vorteilhaft, daß das bewegliche Bauteil über das erste elastische Element mit einer der Antriebskomponenten verbunden ist, da dadurch die Möglichkeit besteht, über eine entsprechende Dimensionierung des ersten elastischen Elements die Bewegung des Bauteils zu beeinflussen. Insgesamt läßt sich somit durch einen vergleichsweise einfach aufgebauten Elektromotor eine Reihe von unterschiedlichen Antriebsbewegungen mit jeweils auf die Anwendung abgestimmten Bewegungseigenschaften erzeugen.

Die beiden Antriebskomponenten sind in der Regel durch wenigstens ein zweites elastisches Element miteinander gekoppelt. Dabei ist es bei einer Reihe von Anwendungen vorteilhaft, wenn die Federstärke des zweiten elastischen Elements größer als die Federstärke des ersten elastischen Elements ist. Das bewegliche Bauteil und die Antriebskomponente, mit der das bewegliche Bauteil über das erste elastische Element verbunden ist, führen vorzugsweise zueinander gegenphasig oszillierende Bewegungen aus.

Bei einem Ausführungsbeispiel der Erfindung ist das bewegliche Bauteil als eine erste Arbeitseinheit ausgebildet, so daß über das erste elastische Element eine Nutzbewegung ausgekoppelt wird. Bei einem weiteren Ausführungsbeispiel ist das bewegliche Bauteil als eine Gegenmasse ausgebildet. Die Gegenmasse dient der Kompensation unerwünschter Schwingungen, so daß bei diesem Ausführungsbeispiel ein Betrieb des elektrischen Kleingeräts mit einem sehr niedrigen Anteil unerwünschter Schwingungen beispielsweise des Gehäuses möglich ist.

Der Elektromotor kann wenigstens eine zweite Arbeitseinheit antreiben. Die zweite Arbeitseinheit kann starr mit einer der Antriebskomponenten verbunden sein. Vorzugsweise führen die beiden Arbeitseinheiten zueinander gegenphasig oszillierende Bewegungen aus, so daß auch aus den Bewegungen der beiden Arbeitseinheiten keine unerwünschten Schwingungen in einem nennenswerten Ausmaß resultieren. Bei vielen Anwendungen ist es vorteilhaft, wenn die beiden Arbeitseinheiten oszillierende Bewegungen mit unterschiedlicher Amplitude und/oder mit unterschiedlicher Frequenz ausführen, was beim erfindungsgemäßen elektrischen Kleingerät mit einem sehr geringen Aufwand realisierbar ist. Insbesondere besteht beim erfindungsgemäßen elektrischen Kleingerät die Möglichkeit, die Amplituden der oszillierenden Bewegungen der beiden Arbeitseinheiten über die elektrische Spule individuell zu steuern. Dadurch ist eine optimale Anpassung an die jeweilige Betriebssituation möglich. Mitunter kann es auch vorteilhaft sein, die beiden Arbeitseinheiten mit derselben Antriebskomponente zu koppeln, wobei insbesondere eine Arbeitseinheit über das erste elastische Element und die andere Arbeitseinheit starr gekoppelt wird.

Bei einem Ausführungsbeispiel des erfindungsgemäßen elektrischen Kleingeräts, wie beispielsweise einem elektrischen Rasierapparat, ist der Elektromotor als oszillierender Linearmotor ausgebildet. Bei einem weiteren Ausführungsbeispiel des erfindungsgemäßen elektrischen Kleingeräts, wie beispielsweise einer elektrischen Zahnbürste, ist der Elektromotor als oszillierender Rotationsmotor ausgebildet. Der oszillierende Rotationsmotor kann so abgewandelt werden, daß er zusätzlich eine kontinuierliche Rotationsbewegung ausführt.

Die Erfindung wird nachstehend anhand der in der Zeichnung dargestellten Ausführungsbeispiele näher erläutert.

Es zeigen:
- Fig. 1: ein Ausführungsbeispiel eines erfindungsgemäß ausgebildeten elektrischen Rasierapparats mit einem statorlosen Linearmotor in einer schematisierten Seitenansicht,
- Fig. 2: den statorlosen Linearmotor des in Fig. 1 dargestellten elektrischen Rasierapparats in einer schematisierten Aufsicht,
- Fig. 3: eine Blockdarstellung für das Schwingungssystem, das durch die in Fig. 1 dargestellten Komponenten ausgebildet wird,
- Fig. 4: ein zweites Ausführungsbeispiel des erfindungsgemäß ausgebildeten elektrischen Rasierapparats in einer schematisierten Seitenansicht,
- Fig. 5: eine Fig. 3 entsprechende Blockdarstellung für das Schwingungssystem, das durch die in Fig. 4 dargestellten Komponenten ausgebildet wird,
- Fig. 6: ein Diagramm für die Schwingungsbewegungen der Masseschwerpunkte des ersten Läufers, des zweiten Läufers inklusive Verbindungsstücke und Schermesser sowie der Scherkopfteile inklusive Scherfolien,
- Fig. 7: ein Ausführungsbeispiel eines statorlosen Linearmotors für zwei verschiedene Schwingungsfrequenzen in einer schematisierten Seitenansicht,
- Fig. 8: eine Fig. 3 entsprechende Blockdarstellung für den in Fig. 7 dargestellten statorlosen Linearmotor,
- Fig. 9: ein Ausführungsbeispiel für einen statorlosen Rotationsmotor in einer schematisierten Seitenansicht,
- Fig. 10: ein weiteres Ausführungsbeispiel für den statorlosen Rotationsmotor in einer schematisierten Seitenansicht,
- Fig. 11: ein gegenüber Fig. 10 nochmals abgewandeltes Ausführungsbeispiel für den statorlosen Rotationsmotor in einer schematisierten Seitenansicht und
- Fig. 12: ein Ausführungsbeispiel für einen statorlosen Rotationsmotor, der eine kontinuierliche Drehbewegung ausführen kann, in einer schematisierten Seitenansicht.

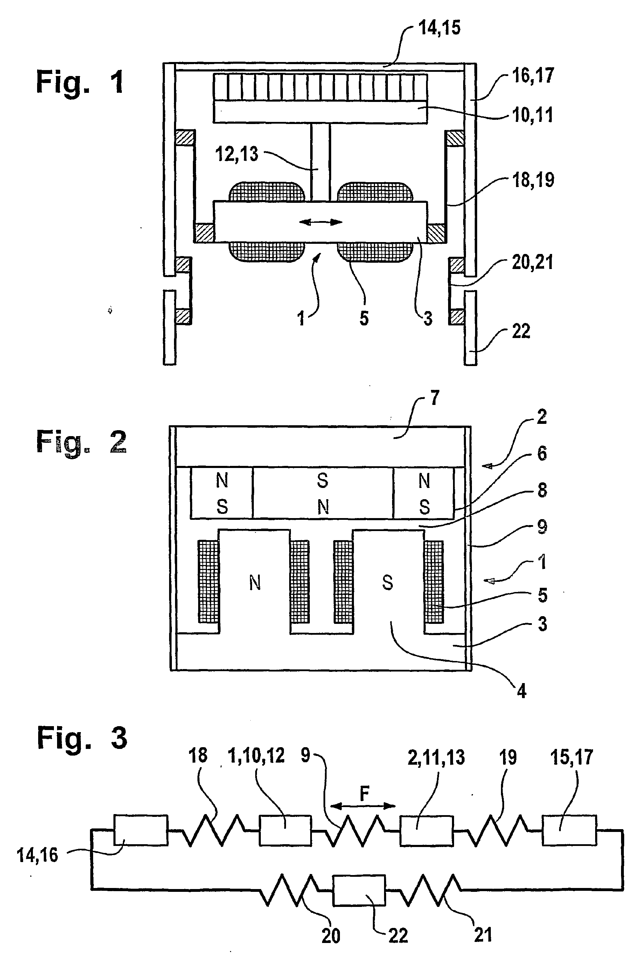

Fig. 1 zeigt ein Ausführungsbeispiel eines erfindungsgemäß ausgebildeten elektrischen Rasierapparats mit einem statorlosen Linearmotor in einer schematisierten Seitenansicht. Eine zugehörige schematisierte Aufsicht auf den statorlosen Linearmotor ist in Fig. 2 dargestellt. Der statorlose Linearmotor weist einen ersten Läufer 1 und einen zweiten Läufer 2 auf, die in einem geringen Abstand zueinander angeordnet sind. Der erste Läufer 1 besteht aus einem Eisenkern 3, der zwei sich in Richtung des zweiten Läufers 2 erstreckende Schenkel 4 aufweist. Auf jedem Schenkel 4 ist eine aus Draht gewickelte Spule 5 angeordnet, wobei die Spulen 5 als separate Einzelspulen oder als eine gemeinsame Spule betrieben werden können. Der zweite Läufer 2 weist drei Dauermagnete 6 auf, die jeweils mit antiparallel orientierter Polung nebeneinander auf einer gemeinsamen Trägerplatte 7 angeordnet sind, so daß jeweils einer der Magnetpole zum Eisenkern 3 des ersten Läufers 1 hin weist. Die Trägerplatte 7 besteht ebenso wie der Eisenkern 3 aus einem Eisenwerkstoff. Die beiden Läufer 1 und 2 sind dicht nebeneinander angeordnet, so daß die Dauermagnete 6 von der Stirnseite des jeweils benachbarten Schenkels 4 des Eisenkerns 3 jeweils nur durch einen kleinen Luftspalt 8 getrennt sind. Die Breite der Luftspalte 8 wird durch zwei Blattfedern 9 vorgegeben, die jeweils seitlich am Eisenkern 3 und an der Trägerplatte 7 befestigt sind. Die Blattfedern 9 haben die Eigenschaft, daß sie sich jeweils innerhalb der von ihnen aufgespannten Ebene wie starre Körper verhalten und senkrecht dazu federnd nachgeben. Für das in Fig. 1 dargestellte Ausführungsbeispiel bedeutet dies, daß sich die beiden Läufer 1 und 2 unter Überwindung der von den Blattfedern 9 erzeugten Rückstellkraft relativ zueinander nach links und rechts bewegen können, ihr Abstand zueinander und damit auch die Breite der Luftspalte 8 dabei aber nahezu unverändert bleiben. Damit ergibt sich ein schwingungsfähiges System, bei dem der erste Läufer 1 und der zweite Läufer 2 jeweils eine lineare Schwingungsbewegung ausführen. Die Bewegungsrichtungen der beiden Läufer 1 und 2 sind jeweils einander entgegengesetzt, d h. die Schwingungsbewegungen verlaufen gegenphasig zueinander.

Die Schwingungsbewegungen werden mittels eines Stromflusses durch die Spulen 5 in Gang gesetzt und aufrecht erhalten. Die Spulen 5 wirken jeweils als Elektromagnet und erzeugen unterstützt durch den Eisenkern 3 ein Magnetfeld, das auf die Dauermagnete 6 einwirkt und eine Relativbewegung zwischen den Spulen 5 und den Dauermagneten 6 zur Folge hat. Durch entsprechende Ansteuerung kann das mit den Spulen 5 erzeugte Magnetfeld jeweils umgepolt werden, so daß die beiden Läufer 1 und 2 in zueinander gegenphasige Schwingungsbewegungen versetzt werden. Der erste Läufer 1 übernimmt somit die antreibende Funktion eines Stators eines herkömmlichen Linearmotors, ist aber im Gegensatz zu diesem nicht ortsfest fixiert, sondern beweglich. Dies führt unter anderem auch dazu, daß sich unter sonst gleichen Bedingungen die beiden Läufer 1 und 2 des statorlosen Linearmotors mit einer Relativgeschwindigkeit zueinander bewegen, die doppelt so hoch wie die Relativgeschwindigkeit zwischen einem Stator und einem Läufer eines herkömmlichen Linearmotors ist. Dadurch läßt sich ein relativ hoher Wirkungsgrad erzielen.

Bei dem in Fig. 1 dargestellten Ausführungsbeispiel treibt der erste Läufer 1 ein erstes Schermesser 10 und der zweite Läufer 2 ein zweites Schermesser 11 des elektrischen Rasierapparats an. Hierzu sind das erste Schermesser 10 über ein erstes Verbindungsstück 12 mit dem ersten Läufer 1 und das zweite Schermesser 11 über ein zweites Verbindungsstück 13 mit dem zweiten Läufer 2 starr verbunden. In Fig. 1 sind die Schermesser 10 und 11 sowie die Verbindungsstücke 12 und 13 jeweils hintereinander angeordnet und daher nicht einzeln sichtbar. In unmittelbarer Nähe zu den beiden Schermessern 10 und 11 sind eine erste Scherfolie 14 und eine zweite Scherfolie 15 angeordnet, die in ein erstes Scherkopfteil 16 bzw. in ein zweites Scherkopfteil 17 integriert sind. Das erste Scherkopfteil 16 ist über Blattfedern 18 mit dem ersten Läufer 1 verbunden. Das zweite Scherkopfteil 17 ist über Blattfedern 19 mit dem zweiten Läufer 2 verbunden. Schließlich sind das erste Scherkopfteil 16 über Blattfedern 20 und das zweite Scherkopfteil 17 über Blattfedern 21 beweglich an einem Gehäuse 22 des elektrischen Rasierapparats aufgehängt. Die Blattfedern 9, 18, 19, 20 und 21 sind so in ihrer Härte abgestuft, daß die Blattfedern 9 am härtesten sind. Die Blattfedern 18 und 19 sind untereinander gleich und etwas weicher als die Blattfedern 9. Die Blattfedern 20 und 21 sind ebenfalls untereinander gleich und am weichsten. Das durch die vorstehend beschriebenen Komponenten ausgebildete Schwingungssystem ist in Fig. 3 dargestellt.

Fig. 3 zeigt eine Blockdarstellung für das Schwingungssystem, das durch die in Fig. 1 dargestellten Komponenten ausgebildet wird. Dabei repräsentieren die einzelnen Blöcke die Massen der sich jeweils gemeinsam bewegenden Komponenten und sind entsprechend mit den Bezugszeichen der zugehörigen Komponenten bezeichnet. Die Blattfedern 9, 18, 19, 20 und 21 werden durch Federsymbole dargestellt, die jeweils zwischen benachbarten Blöcken eingezeichnet sind. Schließlich ist noch die zwischen den beiden Läufern 1 und 2 wirkende Magnetkraft F in Form eines Doppelpfeils dargestellt. Bei einer vorzugsweise mit der Resonanzfrequenz der Läufer 1 und 2 und der damit verbundenen Schermesser 10 und 11 periodisch einwirkenden Magnetkraft F werden die Läufer 1 und 2 und in entsprechender Weise die damit starr verbundenen Schermesser 10 und 11 in zueinander gegenphasige Schwingungsbewegungen versetzt, wobei eine typische Schwingungsamplitude bei ca. 2 mm liegt. Die Schwingungsbewegungen der Läufer 1 und 2 werden über die Blattfedern 18 und 19 auf die Scherkopfteile 16 und 17 inklusive der Scherfolien 14 und 15 übertragen. Da die Blattfedern 18 und 19 vergleichsweise weich ausgebildet sind, werden die Scherkopfteile 16 und 17 zu Schwingungsbewegungen mit deutlich niedrigeren Amplituden angeregt. Typische Werte für die Schwingungsamplituden der Scherkopfteile 16 und 17 und damit auch der Scherfolien 14 und 15 liegen bei ca. 0.2 mm. Zudem verlaufen die Schwingungsbewegungen der Scherfolien 14 und 15 gegenphasig zu den Schwingungsbewegungen der Schermesser 10 und 11. Schließlich werden die Schwingungsbewegungen der Scherkopfteile 16 und 17 über die Blattfedern 20 und 21 noch auf das Gehäuse 22 übertragen. Da die Blattfedern 20 und 21 sehr weich sind und das Gehäuse 22 eine große Masse besitzt, ist der Energieübertrag auf das Gehäuse 22 aber sehr gering. Zudem kommt es durch die Gegenphasigkeit der Schwingungsbewegungen z. T. auch zu Kompensationseffekten.

Insgesamt lassen sich mit dem in Fig. 1 dargestellten statorlosen Linearmotor das erste Schermesser 10, das zweite Schermesser 11, die erste Scherfolie 14 und die zweite Scherfolie 15 ohne Getriebe oder ähnliche Hilfsmittel in jeweils verschiedene Schwingungsbewegungen versetzen. Dabei schwingen die beiden Schermesser 10 und 11 gegenphasig zueinander und jeweils gegenphasig zu der zugehörigen Scherfolie 14 bzw. 15.

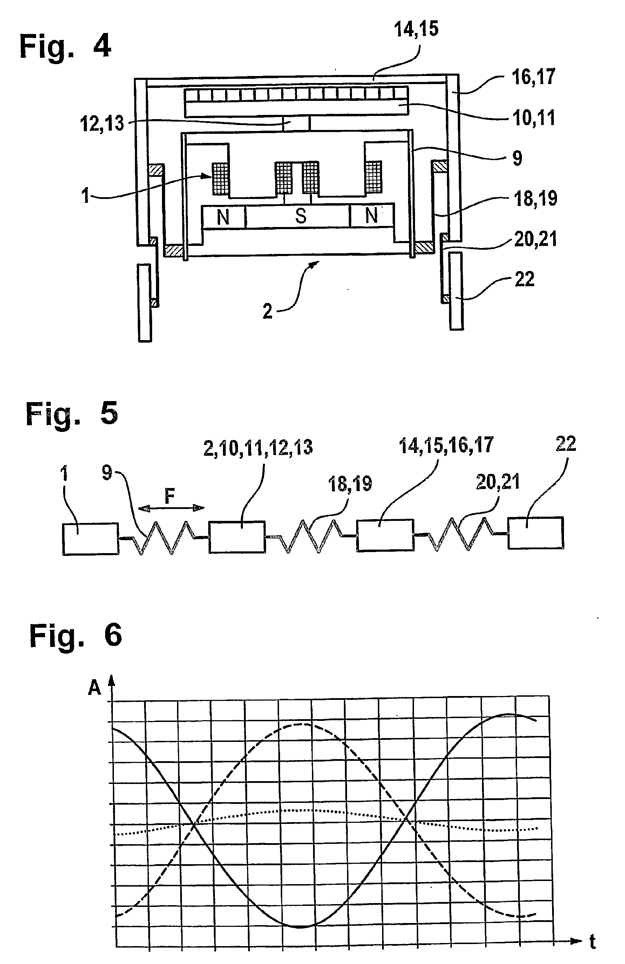

Fig. 4 zeigt ein zweites Ausführungsbeispiel des erfindungsgemäß ausgebildeten elektrischen Rasierapparats in einer schematisierten Seitenansicht. Verglichen mit Fig. 1 ist der statorlose Linearmotor beim zweiten Ausführungsbeispiel um 90 Grad verdreht in den elektrischen Rasierapparat eingebaut, d. h. in der gewählten Ansicht sind die beiden Läufer 1 und 2 nicht hintereinander, sondern übereinander angeordnet. Dabei sind die beiden Läufer 1 und 2 wiederum untereinander durch die Blattfedern 9 verbunden. Das erste Schermesser 10 und das zweite Schermesser 11 sind über das erste Verbindungsstück 12 und das zweite Verbindungsstück 13 mit dem zweiten Läufer 2 verbunden. Die erste Scherfolie 14 und das erste Scherkopfteil 16 sowie die zweite Scherfolie 15 und das zweite Scherkopfteil 17 sind über die Blattfedern 18 und 19 ebenfalls mit dem zweiten Läufer 2 verbunden und zudem noch über die Blattfedern 20 und 21 an dem Gehäuse 22 aufgehängt. Dies bedeutet, daß der erste Läufer 1 beim zweiten Ausführungsbeispiel keine Antriebsfunktion übernimmt, sondern frei schwingt. Das Schwingungsverhalten des gesamten Systems wird anhand von Fig. 5 näher erläutert.

Fig. 5 zeigt eine Fig. 3 entsprechende Blockdarstellung für das Schwingungssystem, das durch die in Fig. 4 dargestellten Komponenten ausgebildet wird. Das Schwingungsverhalten hängt stark vom Verhältnis der Masse des ersten Läufers 1 zur Masse des zweiten Läufers 2 inklusive der Verbindungsstücke 12 und 13 und der Schermesser 10 und 11 ab. Sind die Massen unterschiedlich groß, so stellen sich aufgrund der Impulserhaltung entsprechend unterschiedliche Schwingungsamplituden des ersten und zweiten Läufers 1 und 2 ein. Damit die Schwingungsamplitude des ersten Schermessers 10 und des zweiten Schermessers 11 bei Belastung nicht zu stark einbricht, sollten die Federkräfte der Blattfedern 9 deutlich grö-βer sein als die Reibungskräfte der Schermesser 10 und 11 an den Scherfolien 14 und 15. Weiterhin sollten der Massenschwerpunkt des ersten Läufers 1, der Massenschwerpunkt des zweiten Läufers 2 inklusive der Verbindungsstücke 12 und 13 sowie der Schermesser 10 und 11 und der Massenschwerpunkt der Scherkopfteile 16 und 17 inklusive der Scherfolien 14 und 15 in der Ruhelage möglichst aufeinander liegen. Die Schwingungsbewegungen dieser drei Masseschwerpunkte sind in Fig. 6 dargestellt.

Fig. 6 zeigt ein Diagramm für die Schwingungsbewegungen der Masseschwerpunkte von Komponenten bzw. von Gruppen von Komponenten des in Fig. 4 dargestellten Ausführungsbeispiels des elektrischen Rasierapparats. Auf der Abszisse ist die Zeit t und auf der Ordinate die Auslenkung A der Massenschwerpunkte aus der Ruhelage aufgetragen. Die Schwingungsbewegung des Massenschwerpunktes des ersten Läufers 1 ist als gestrichelte Linie dargestellt. Die vom Massenschwerpunkt des zweiten Läufers 2 inklusive der Verbindungsstücke 12 und 13 sowie der Schermesser 10 und 11 ausgeführte Schwingungsbewegung ist als durchgezogene Linie dargestellt. Die punktierte Linie repräsentiert die Schwingungsbewegung des Massenschwerpunkts der Scherkopfteile 16 und 17 inklusive der Scherfolien 14 und 15. Für die Darstellung wurden die Massen des ersten Läufers 1 und des zweiten Läufers 2 inklusive der damit verbundenen Komponenten gleich groß gewählt, so daß der erste Läufer 1 und der zweite Läufer 2 eine gegenphasige Schwingungsbewegung mit gleicher Schwingungsamplitude ausführen. Die Scherkopfteile 16 und 17 inklusive der Scherfolien 14 und 15 schwingen ebenfalls gegenphasig zum zweiten Läufer 2, allerdings mit einer wesentlich geringeren Schwingungsamplitude.

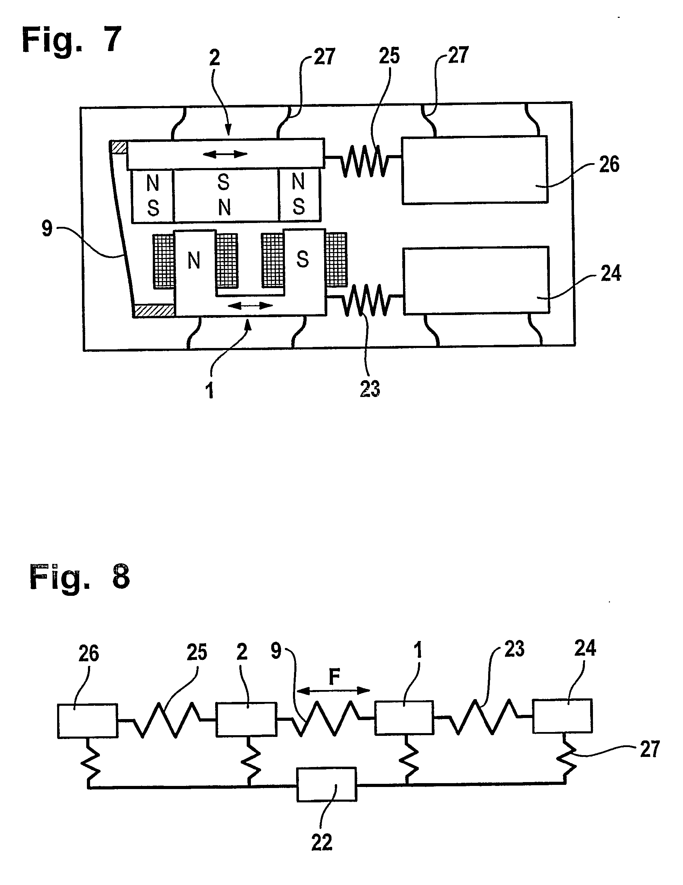

Fig. 7 zeigt ein Ausführungsbeispiel eines statorlosen Linearmotors für zwei verschiedene Schwingungsfrequenzen in einer schematisierten Seitenansicht. Bei diesem Ausführungsbeispiel ist der erste Läufer 1 über eine Schraubenfeder 23 mit einer ersten Gegenmasse 24 und der zweite Läufer 2 über eine Schraubenfeder 25 mit einer zweiten Gegenmasse 26 verbunden. Die Schraubenfedern 23 und 25 weisen eine deutlich höhere Federkonstante als die Blattfedern 9 auf, von denen aus Gründen der Übersichtlichkeit in Fig. 7 nur eine dargestellt ist. Sowohl die beiden Läufer 1 und 2 als auch die beiden Gegenmassen 24 und 26 sind über Blattfedern 27, die sehr schwach ausgebildet sind, am Gehäuse 22 linear beweglich aufgehängt, so daß auf das Gehäuse 22 nur sehr geringe Vibrationen übertragen werden. Der erste Läufer 1, die Schraubenfeder 23 und die erste Gegenmasse 24 sowie der zweite Läufer 2, die Schraubenfeder 25 und die zweite Gegenmasse 26 bilden jeweils ein Schwingungssystem, das durch Anlegen eines geeigneten Spannungssignals an die Spulen 5 zu Schwingungsbewegungen angeregt werden kann. Wenn die beiden Schwingungssysteme so ausgebildet werden, daß sie unterschiedliche Resonanzfrequenzen aufweisen, können diese über zwei entsprechende Anregungsfrequenzen im Spannungssignal gezielt angeregt werden und damit die Schwingungsamplituden der beiden Schwingungssysteme jeweils individuell beeinflußt werden. Entsprechend können auch die Schwingungsamplituden der Schermesser 10 und 11 sowie der Scherfolien 14 und 15 beeinflußt werden, die mit den beiden Schwingungssystemen gekoppelt sind. Diese individuelle Steuermöglichkeit über das Spannungssignal läßt sich beispielsweise auch bei dem in Fig. 4 dargestellten Ausführungsbeispiel und bei weiteren Ausführungsbeispielen der Erfindung anwenden.

Fig. 8 zeigt eine Fig. 3 entsprechende Blockdarstellung für den in Fig. 7 dargestellten statorlosen Linearmotor. Der erste Läufer 1 und die erste Gegenmasse 24 führen eine gegenphasige Schwingungsbewegung aus. Ebenso führen auch der zweite Läufer 2 und die zweite Gegenmasse 26 eine gegenphasige Schwingungsbewegung aus. Durch diese Gegenphasigkeit kann verhindert werden, daß Vibrationen in einem nennenswerten Ausmaß auf das Gehäuse 22 übertragen werden. Die Frequenzen dieser Schwingungsbewegungen entsprechen in der Regel jeweils den Resonanzfrequenzen der beiden Schwingungssysteme. Die Schwingungsamplituden können über die Ansteuerung der Spule 5 individuell beeinflußt werden.

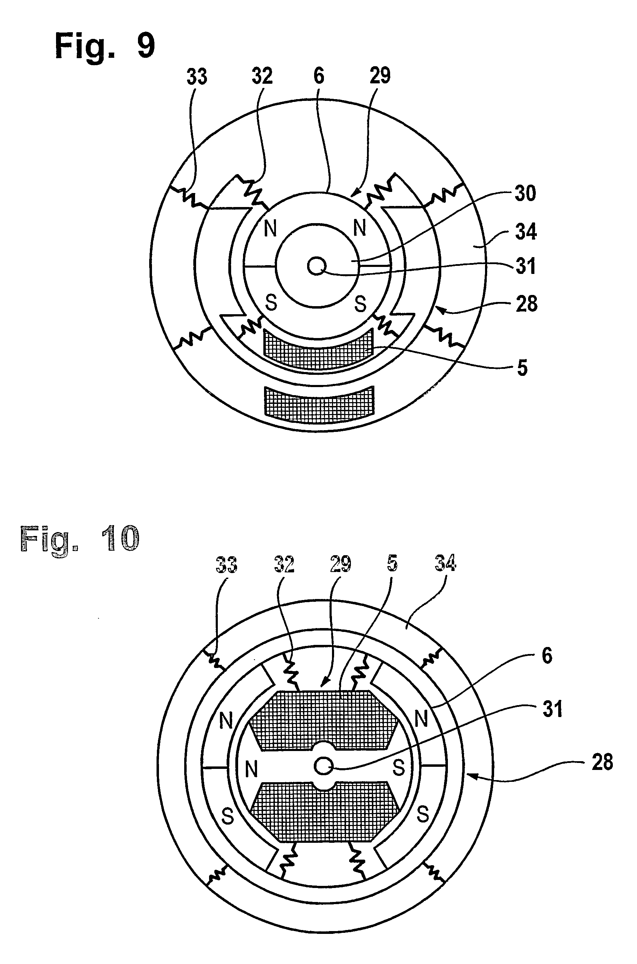

Die Erfindung ist nicht auf elektrische Rasierapparate und andere elektrische Kleingeräte mit Linearmotoren beschränkt, sondern kann auch bei elektrischen Kleingeräten mit Rotationsmotoren, beispielsweise bei elektrischen Zahnbürsten eingesetzt werden. Dies ist in den Fig. 9 bis 12 dargestellt.

Fig. 9 zeigt ein Ausführungsbeispiel für einen statorlosen Rotationsmotor in einer schematisierten Seitenansicht. Der statorlose Rotationsmotor weist ähnliche Funktionskomponenten wie der statorlose Linearmotor auf. Allerdings sind diese Funktionskomponenten jeweils so abgewandelt, daß anstelle einer Linearbewegung eine Rotationsbewegung entsteht. So weist der statorlose Rationsmotor einen äußeren Rotor 28 auf, der drehbar aufgehängt ist und aus einem Eisenwerkstoff besteht. Der äußere Rotor 28 verläuft bereichsweise innerhalb der Spule 5 ohne diese jedoch zu berühren, so daß der äußere Rotor 28 relativ zu der ortsfest angeordneten Spule 5 verdreht werden kann. Innerhalb des äußeren Rotors 28 ist ein innerer Rotor 29 angeordnet, der einen Rotorkern 30 aus einem Eisenwerkstoff und daran befestigte Dauermagnete 6 aufweist. Der innere Rotor 29 ist ebenfalls drehbar aufgehängt, wobei der äußere Rotor 28 und der innere Rotor 29 über eine gemeinsame Drehachse 31 verfügen. Des weiteren weist der Rotationsmotor noch eine Reihe von Schraubenfedern 32 auf, die zwischen dem äußeren Rotor 28 und dem inneren Rotor 29 angeordnet sind sowie von Schraubenfedern 33, die zwischen dem äußeren Rotor 28 und einem hohlzylindrischen Teil 34 angeordnet sind. Das hohlzylindrische Teil 34 kann Bestandteil des Gehäuses 22 sein oder über figürlich nicht dargestellte Federn am Gehäuse 22 aufgehängt sein und beispielsweise im Falle einer elektrischen Zahnbürste mit einer Aufsteckzahnbürste verbunden sein. Der Rotationsmotor weist somit zwei Resonanzfrequenzen auf. Im Hinblick auf die Steuerung des Rotationsmotors gelten die vorstehenden Erläuterungen zur Steuerung des Linearmotors in analoger Weise. Bei der konkreten Realisierung des statorlosen Rotationsmotors in einem elektrischen Kleingerät werden statt der beiden Sätze von Schraubenfedern 32 und 33 vorzugsweise je eine oder mehrere Torsionsfedern eingesetzt.

Fig. 10 zeigt ein weiteres Ausführungsbeispiel für den statorlosen Rotationsmotor in einer schematisierten Seitenansicht. Dieses Ausführungsbeispiel unterscheidet sich von Fig. 9 im wesentlichen dadurch, daß die Spule 5 ein Bestandteil des inneren Rotors 29 und die Dauermagnete 6 Bestandteile des äußeren Rotors 28 sind.

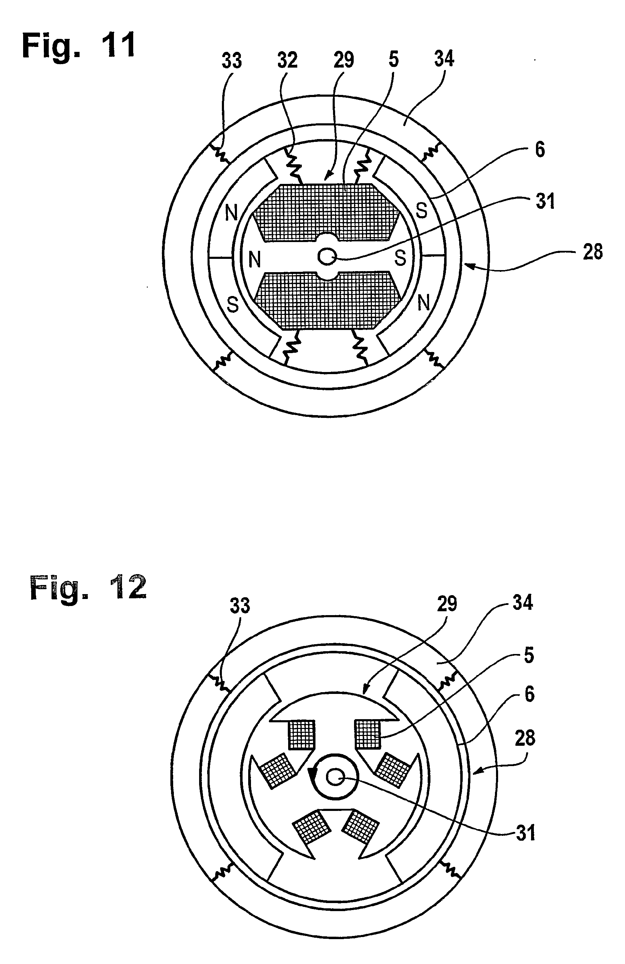

Fig. 11 zeigt ein gegenüber Fig. 10 nochmals abgewandeltes Ausführungsbeispiel für den statorlosen Rotationsmotor in einer schematisierten Seitenansicht. Bei diesem Ausführungsbeispiel wurde gegenüber Fig. 10 lediglich die Anordnung der Dauermagnete 6 geändert. Die geänderte Anordnung führt dazu, daß der äußere Rotor 28 und der innere Rotor 29 zu linearen Schwingungsbewegungen angeregt werden, die in der Darstellung der Fig. 11 in vertikaler Richtung verlaufen.

Fig. 12 zeigt ein Ausführungsbeispiel für einen statorlosen Rotationsmotor, der eine kontinuierliche Drehbewegung ausführen kann, in einer schematisierten Seitenansicht. Bei diesem Ausführungsbeispiel ist der äußere Rotor 28 mit den Dauermagneten 6 bestückt und der innere Rotor 29 weist mehrere Spulen 5 auf. Zwischen dem äußeren Rotor 28 und dem hohlzylindrischen teil 34 sind die Schraubenfedern 33 angeordnet. Um ein freies Rotieren des inneren Rotors 29 zu ermöglichen, sind an diesem keine Schraubenfedern 32 angebracht. Die Rotationsbewegung des inneren Rotors 29 wird durch eine abwechselnde Ansteuerung der Spulen 5 mit einer Gleichspannung erzeugt, wobei die Ansteuerung in bekannter Weise mit Hilfe von elektronischen Schaltern erfolgen kann. Der Gleichspannung wird eine Wechselspannung überlagert, so daß der äußere Rotor 28 zu Drehschwingungen angeregt wird, die über die Schraubenfedern 33 auf das Gehäuse 22 übertragen werden. Die Ansteuerung wird vorzugsweise so durchgeführt, daß die Wechselspannungsamplitude nicht größer als die Gleichspannung wird. Die Federstärke der Schraubenfedern 33 wird so dimensioniert, daß sich die gewünschte Schwingungsbewegung des hohlzylindrischen Teils 34 ergibt.

In einer abgewandelten Ausgestaltung wird eine Schwingungsbewegung dadurch erzeugt, daß der innere Rotor 29 mit einer Unwucht ausgebildet wird. Die Amplitude der dadurch verursachten Schwingungsbewegung kann über die Wahl der Drehfrequenz des inneren Rotors 29 relativ zur Resonanzfrequenz der Schwingungsbewegung beeinflußt werden.

## Patentansprüche

1. Elektrisches Kleingerät mit einem statorlosen Elektromotor zum Erzeugen wenigstens einer oszillierenden Bewegung, wobei der statorlose Elektromotor zwei Antriebskomponenten (1, 2, 28, 29) aufweist und eine der Antriebskomponenten (1, 2, 28, 29) über wenigstens ein erstes elastisches Element (18, 19, 23,25, 33) mit wenigstens einem beweglichen Bauteil verbunden ist und mittels eines Magnetfelds einer elektrischen Spule (5) zu einer oszillierenden Bewegung anregbar ist, **dadurch gekennzeichnet, daß** beide Antriebskomponenten (1, 2, 28, 29) sich gegenseitig antreiben und zur Ausführung von zueinander gegenphasig oszillierenden Bewegungen beweglich im elektrischen Kleingerät angeordnet sind, und daß der Statorlose Elektromotor keinen ortsfest fixierten Stator hat.

2. Elektrisches Kleingerät nach Anspruch 1, **dadurch gekennzeichnet, daß** die beiden Antriebskomponenten (1, 2, 28, 29) durch wenigstens ein zweites elastisches Element (9, 32) miteinander gekoppelt sind.

3. Elektrisches Kleingerät nach Anspruch 2, **dadurch gekennzeichnet, daß** die Federstärke des zweiten elastischen Elements (9, 32) größer als die Federstärke des ersten elastischen Elements (18, 19, 33) ist.

4. Elektrisches Kleingerät nach einem der vorhergehenden Ansprüche, **dadurch gekennzeichnet, daß** das bewegliche Bauteil und die Antriebskomponente (1, 2, 28, 29), mit der das bewegliche Bauteil über das erste elastische Element (18, 19, 23,25, 33) verbunden ist, zueinander gegenphasig oszillierende Bewegungen ausführen.

5. Elektrisches Kleingerät nach einem der vorhergehenden Ansprüche, **dadurch gekennzeichnet, daß** das bewegliche Bauteil als eine erste Arbeitseinheit (14, 15, 34) ausgebildet ist.

6. Elektrisches Kleingerät nach einem der Ansprüche 1 bis 4, **dadurch gekennzeichnet, daß** das bewegliche Bauteil als eine Gegenmasse (24, 26) ausgebildet ist.

7. Elektrisches Kleingerät nach einem der vorhergehenden Ansprüche, **dadurch gekennzeichnet, daß** der Elektromotor wenigstens eine zweite Arbeitseinheit (10,11) antreibt.

8. Elektrisches Kleingerät nach Anspruch 7, **dadurch gekennzeichnet, daß** die zweite Arbeitseinheit (10, 11) starr mit einer der Antriebskomponenten (1, 2) verbunden ist.

9. Elektrisches Kleingerät nach einem der Ansprüche 7 oder 8, **dadurch gekennzeichnet, daß** die beiden Arbeitseinheiten (10, 11, 14, 15) zueinander gegenphasig oszillierende Bewegungen ausführen.

10. Elektrisches Kleingerät nach einem der Ansprüche 7 bis 9, **dadurch gekennzeichnet, daß** die beiden Arbeitseinheiten (10, 11, 14, 15) oszillierende Bewegungen mit unterschiedlicher Amplitude und/oder unterschiedlicher Frequenz ausführen.

11. Elektrisches Kleingerät nach einem der Ansprüche 7 bis 10, **dadurch gekennzeichnet, daß** die Amplituden der oszillierenden Bewegungen der beiden Arbeitseinheiten (10, 11, 14, 15) über die elektrische Spule (5) individuell steuerbar sind.

12. Elektrisches Kleingerät nach einem der Ansprüche 7 bis 11, **dadurch gekennzeichnet, daß** die beiden Arbeitseinheiten (10, 11, 14, 15) mit derselben Antriebskomponente (1, 2) gekoppelt sind.

13. Elektrisches Kleingerät nach einem der vorhergehenden Ansprüche, **dadurch gekennzeichnet, daß** der Elektromotor als oszillierender Linearmotor ausgebildet ist.

14. Elektrisches Kleingerät nach Anspruch 13, **dadurch gekennzeichnet, daß** es als ein elektrischer Rasierapparat ausgebildet ist.

15. Elektrisches Kleingerät nach einem der Ansprüche 1 bis 12, **dadurch gekennzeichnet, daß** der Elektromotor als oszillierender Rotationsmotor ausgebildet ist.

16. Elektrisches Kleingerät nach Anspruch 15, **dadurch gekennzeichnet, daß** der oszillierende Rotationsmotor zusätzlich eine kontinuierliche Rotationsbewegung ausführt.

17. Elektrisches Kleingerät nach einem der Ansprüche 15 oder 16, **dadurch gekennzeichnet, daß** es als eine elektrische Zahnbürste ausgebildet ist.

## Claims

1. A small electrical appliance having a stator-less electric motor for producing at least one oscillating movement, wherein the stator-less electric motor has two drive components (1, 2; 28, 29), one of which drive components (1, 2; 28, 29) is connected to at least one moving component via at least one first elastic element (18, 19; 23, 25; 33) and is excitable into an oscillating movement by means of a magnetic field of an electrical winding (5); **characterized in that** the two drive components (1, 2; 28, 29) drive each other, and are movably disposed in the small electrical appliance so as to be able to execute opposite-phase oscillating movements, and **in that** the stator-less electric motor has no spatially fixed stator.

2. The small electrical appliance according to claim 1; **characterized in that** the two drive components (1, 2; 28, 29) are coupled to each other by at least one second elastic element (9; 32).

3. The small electrical appliance according to claim 2; **characterized in that** the spring strength of the second elastic element (9; 32) is greater than the spring strength of the first elastic element (18, 19; 33).

4. The small electrical appliance according to any one of the preceding claims; **characterized in that** the moving component and the drive component (1, 2; 28, 29), to which the moving component is connected via the first elastic element (18, 19; 23, 25; 33), execute opposite-phase oscillating movements.

5. The small electrical appliance according to any one of the preceding claims; **characterized in that** the moving component is in the form of a first working unit (14,15; 34).

6. The small electrical appliance according to one of claims 1 to 4; **characterized in that** the moving component is in the form of a counter-mass (24, 26).

7. The small electrical appliance according to any one of the preceding claims; **characterized in that** the electric motor drives at least one second working unit (10, 11).

8. The small electrical appliance according to claim 7; **characterized in that** the second working unit (10, 11) is rigidly connected to one of the drive components (1, 2).

9. The small electrical appliance according to one of claims 7 or 8; **characterized in that** the two working units (10, 11; 14, 15) execute opposite-phase oscillating movements.

10. The small electrical appliance according to any one of claims 7 to 9; **characterized in that** the two working units (10, 11; 14, 15) execute oscillating movements with different amplitudes and/or frequencies.

11. The small electrical appliance according to any one of claims 7 to 10; **characterized in that** the amplitudes of the oscillating movements of the two operating units (10, 11; 14, 15) are individually controllable via the electrical winding (5).

12. The small electrical appliance according to one of claims 7 to 11; **characterized in that** the two working units (10, 11; 14, 15) are coupled to the same drive component (1, 2).

13. The small electrical appliance according to any one of the preceding claims; **characterized in that** the electric motor is in the form of an oscillating linear motor.

14. The small electrical appliance according to claim 13; **characterized in that** it is in the form of an electric razor apparatus.

15. The small electrical appliance according to any one of claims 1 to 12; **characterized in that** the electric motor is in the form of an oscillating rotary motor.

16. The small electrical appliance according to claim 15; **characterized in that** the oscillating rotary motor additionally executes a continuous rotary movement.

17. The small electrical appliance according to one of claims 15 or 16; **characterized in that** it is in the form of an electric toothbrush.

## Revendications

1. Petit appareil électrique comprenant un moteur électrique sans stator permettant de produire au moins un mouvement oscillant, le moteur électrique sans stator présentant deux composants d'entraînement (1, 2, 28, 29) et l'un des composants d'entraînement (1, 2, 28, 29) étant relié à au moins un composant mobile par l'intermédiaire d'au moins un premier élément élastique (18, 19, 23, 25, 33) et pouvant être amené à un mouvement oscillant à l'aide d'un champ magnétique d'une bobine électrique (5), **caractérisé en ce que** les deux composants d'entraînement (1, 2, 28, 29) s'entraînent réciproquement et sont disposés de façon mobile dans le petit appareil électrique pour réaliser des mouvements oscillants en opposition de phase entre eux, et **en ce que** le moteur électrique sans stator ne possède aucun stator fixe.

2. Petit appareil électrique selon la revendication 1, caractérisé en ce queles deux composants d'entraînement (1, 2, 28, 29) sont accouplés entre eux par au moins un second élément élastique (9, 32).

3. Petit appareil électrique selon la revendication 2, **caractérisé en ce que** la rigidité de ressort du second élément élastique (9, 32) est supérieure à la rigidité du premier élément élastique (18, 19, 33).

4. Petit appareil électrique selon l'une des revendications précédentes, **caractérisé en ce que** le composant mobile et le composant d'entraînement (1, 2, 28, 29), auquel le composant mobile est relié par l'intermédiaire du premier élément élastique (18, 19, 23, 25, 33), réalisent des mouvements oscillants en opposition de phase entre eux.

5. Petit appareil électrique selon l'une des revendications précédentes, **caractérisé en ce que** le composant mobile est conçu sous la forme d'une première unité de travail (14, 15, 34).

6. Petit appareil électrique selon l'une des revendications 1 à 4, **caractérisé en ce que** le composant mobile est conçu sous la forme d'une contre-masse (24, 26).

7. Petit appareil électrique selon l'une des revendications précédentes, **caractérisé en ce que** le moteur électrique entraîne au moins une seconde unité de travail (10, 11).

8. Petit appareil électrique selon la revendication 7, **caractérisé en ce que** la seconde unité de travail (10, 11) est relié de façon rigide à l'un des composants d'entraînement (1,2).

9. Petit appareil électrique selon l'une des revendications 7 ou 8, **caractérisé en ce que** les deux unités d'entraînement (10, 11, 14, 15) réalisent des mouvements oscillants en opposition de phase entre eux.

10. Petit appareil électrique selon l'une des revendications 7 à 9, **caractérisé en ce que** les deux unités d'entraînement (10, 11, 14, 15) réalisent des mouvements oscillants présentant une amplitude différente et/ou une fréquence différente.

11. Petit appareil électrique selon l'une des revendications 7 à 10, **caractérisé en ce que** les amplitudes des mouvements oscillants des deux unités de travail (10, 11, 14, 15) peuvent être commandées individuellement par la bobine électrique (5).

12. Petit appareil électrique selon l'une des revendications 7 à 11, **caractérisé en ce que** les deux unités de travail (10, 11, 14, 15) sont accouplées au même composant d'entraînement (1,2).

13. Petit appareil électrique selon l'une des revendications précédentes, **caractérisé en ce que** le moteur électrique est conçu sous la forme d'un moteur linéaire oscillant.

14. Petit appareil électrique selon la revendication 13, **caractérisé en ce qu'**il est conçu sous la forme d'un rasoir électrique.

15. Petit appareil électrique selon l'une des revendications 1 à 12, **caractérisé en ce que**, le moteur électrique est conçu sous la forme d'un moteur rotatif oscillant.

16. Petit appareil électrique selon la revendication 15, **caractérisé en ce que** le moteur rotatif oscillant réalise également un mouvement de rotation continu.

17. Petit appareil électrique selon l'une des revendications 15 ou 16, **caractérisé en ce qu'**il est conçu sous la forme d'une brosse à dents électrique.
